# EUROPÄISCHE PATENTSCHRIFT

(11) **EP 3 323 494 B1**
(45) Veröffentlichungstag und Bekanntmachung des Hinweises auf die Patenterteilung: **07.04.2021**
(21) Anmeldenummer: 17202325.1
(22) Anmeldetag: 17.11.2017
(51) Int. Cl.: B01D 46/02, B01D 29/13

(54) **HALTESCHIENE ZUM ANBRINGEN AN EINER FILTERPATRONE**
HOLDING RAIL FOR FITTING TO A FILTER CARTRIDGE
RAIL DE RETENUE DESTINÉ À ÊTRE APPLIQUÉ SUR UNE CARTOUCHE DE FILTRAGE

(30) Priorität: 17.11.2016 DE 102016122130
(43) Veröffentlichungstag der Anmeldung: 23.05.2018
(73) Patentinhaber: Camfil APC GmbH, 78532 Tuttlingen (DE)
(72) Erfinder: Handte, Jakob, 78532 Tuttlingen (DE); Vangilder, Daniel, 78532 Tuttlingen (DE); Walters, Mike, 78532 Tuttlingen (DE); Wells, Alex, 78532 Tuttlingen (DE); Hudson, Tim, 78532 Tuttlingen (DE); Huckaby, Randy, 78532 Tuttlingen (DE); Lovett, Matthew, 78532 Tuttlingen (DE)
(74) Vertreter: Winter, Brandl - Partnerschaft mbB

(56) Entgegenhaltungen:
- WO-A1-91/06359
- WO-A1-2007/012509
- WO-A2-2009/089891
- DE-A1-102014 006 473
- US-A- 4 046 526

## Beschreibung

Die Erfindung betrifft eine Filterpatrone zum Abscheiden von Partikeln.

Aus dem Stand der Technik sind Filterpatronen zum Abscheiden von Partikeln bekannt. Beispielsweise zeigt die WO 91/06359 A1 eine durch Querstreben und Längsstangen versteifte Filterpatrone.

Weiterhin offenbart die DE 10 2014 006 473 A1 eine Filtervorrichtung mit einem Gehäuse, in dem wenigstens ein Filterelement untergebracht ist, das einen von einem Filtermaterial umgebenen Innenraum aufweist und das von einem Rohgas von außen nach innen durchströmt wird, und mit einer Reinigungsvorrichtung, die wenigstens eine Druckluftleitung aufweist, aus deren Auslassöffnung das Filterelement von innen beaufschlagende Druckluft strömt, wobei der Innenraum des Filterelementes in wenigstens zwei voneinander getrennte Innenraumbereiche unterteilt ist, und dass jedem Innenraumbereich wenigstens eine Druckluftleitung zugeordnet ist, in der jeweils ein Ventil sitzt.

Der Stand der Technik hat jedoch immer den Nachteil, dass die Filterpatronen nur mit relativ großem Montageaufwand von der Unterteilung und dem Druckluftventil entfernt werden können. Die Filterpatronen müssen aber regelmäßig ausgetauscht werden, wenn sich das Filtermaterial zusetzt oder beschädigt wird. Dadurch werden also im Betrieb der Filteranlage relativ hohe laufende Kosten verursacht.

Es ist also die Aufgabe der Erfindung, die Nachteile aus dem Stand der Technik zu vermeiden oder wenigstens zu mildern. Insbesondere soll eine Filteranlage mit einer Filterpatrone oder besser mehreren Filterpatronen zur Verfügung gestellt werden, deren Filterpatrone/Filterpatronen ohne großen Aufwand ausgetauscht werden kann/können.

Diese Aufgabe wird durch eine Filterpatrone mit den Merkmalen des Anspruchs 1 gelöst. Genauer gesagt wird die Aufgabe durch eine Filterpatrone zum Abscheiden von Partikeln gelöst, mit einem Einsatz, der den Innenraum der Filterpatrone in mehrere voneinander getrennte Innenraumbereiche unterteilt, wobei die Filterpatrone zwei auf einer Innenseite der Filterpatrone gegenüberliegend angebrachte Halteschienen besitzt, wobei die Halteschienen zum Einsatz in einer Partikel abscheidenden Filteranlage vorgesehen sind und einen Hauptkörper aufweisen, an dem ein Haltebereich zum Anbringen des Einsatzes vorhanden ist und an dem auch ein Befestigungsbereich zum Koppeln an der Filterpatrone vorhanden ist, wobei der Einsatz eine Kontaktstelle besitzt, die vorbereitet ist, um den Haltebereich der Halteschienen aufzunehmen, und wobei der Einsatz lösbar an dem Haltebereich angebracht ist, wobei der Kontakt zwischen dem Haltebereich und der Kontaktstelle so ausgestaltet ist, dass kein Rohgas/Reingas von einem Innenraumbereich in einen anderen Innenraumbereich strömen kann.

Dies hat den Vorteil, dass die Filterpatrone besonders einfach ausgetauscht werden kann, da sie auf die Halteschiene schnell und einfach aufschiebbar ist. Dadurch kann die Filterpatrone ohne einen Wechsel und/oder Ausbau des Einsatzes oder des Druckluftventils getauscht werden, so dass ein Wechsel der Filterpatrone besonders kostengünstig durchgeführt werden kann.

Vorteilhafte Ausführungsformen sind in den Unteransprüchen beansprucht und werden nachfolgend näher erläutert.

Weiterhin ist es zweckmäßig, wenn die Halteschiene im Querschnitt eine y-artige Konfiguration besitzt. Die y-Form dient mit den zwei Schenkeln als Führungsschiene für den Einsatz und komplettiert somit die Teilung der Filterpatrone in mehrere Innenraumbereiche. Die y-artige Form gewährleistet ein besonders leichtes Einschieben eines gegenstückhaft ausgebildeten Einsatzes.

Auch ist es vorteilhaft, wenn der Hauptkörper als längliches Schild ausgebildet ist, weil der Hauptkörper dadurch besonders wirksam und einfach herzustellen eine Fortsetzung des Einsatzes bildet. Bevorzugt ist der Hauptkörper auch etwa genauso dick wie der Einsatz ausgebildet, was sich günstig auf die Durchströmungseigenschaften der Filterpatrone auswirkt.

Ein günstiges Ausführungsbeispiel zeichnet sich dadurch aus, dass die Halteschiene nach Art einer gas-undurchlässigen (Blech-)Platte ausgebildet ist. So wird vermieden, dass ein Teil der Luft des Druckluftstoßes beim Reinigen in den nicht mit Druck beaufschlagten Innenraumbereich der Filterpatrone entweicht.

Ferner ist es von Vorteil, wenn der Haltebereich geometrisch zum Einschieben des Einsatzes, etwa nach Art einer Trennwand/eines Schwertes, vorbereitet ist. Die geometrische Ausgestaltung des Haltebereichs dient dann als Führung für den Einsatz und erleichtert das Aufschieben der Filterpatrone auf den Einsatz.

Zudem kann der Haltebereich nutförmig und/oder konkav ausgebildet sein. Eine Nut oder eine konkave Fläche eignet sich hier besonders, da ein passend ausgebildeter Vorsprung des Einsatzes etwa nach Art einer Nase vorbereitet ist, um in den Haltebereich einzugreifen.

Außerdem kann der Haltebereich bevorzugterweise c- oder u-förmig ausgestaltet sein, wobei ein Schenkel/Bereich/Abschnitt des c- oder u-förmigen Haltebereichs auch in einen Bereich des Einsatzes eingreifen kann. Die gleichmäßigen Schenkel eines c-förmigen oder u-förmigen Haltebereichs bieten eine Führung, aus der der Einsatz nicht seitlich herausrutschen kann, sondern in einer vorgegebenen Bahn, aber gleichzeitig gegeneinander verschiebbar geführt wird.

So ist es von Vorteil, wenn der Befestigungsbereich auf der dem Haltebereich gegenüberliegenden Seite des Hauptkörpers angeordnet ist. So kann die Belastung, die die Halteschiene durch das Führen des Einsatzes aufnimmt, besonders gut in die Filterpatrone eingeleitet werden.

Weiterhin ist es zweckmäßig, wenn der Befestigungsbereich nach Art eines Zapfens, Dorns, Stifts und/oder Vorsprungs ausgebildet ist und vorzugsweise an einem axialen Ende in Radialrichtung der Filterpatrone absteht. Der Befestigungsbereich kann so besonders einfach und sicher an der Filterpatrone befestigt werden, so dass die Halteschiene fest mit der Filterpatrone verbunden ist.

Zusätzlich kann auf der Seite des Befestigungsbereiches ein Dichtbereich anschließen, der eine luft-/aerosoldichte Anlage des Hauptkörpers an einer Seite/Wandung, vorzugsweise einer Innenwandung, der Filterpatrone gewährleistet. So kann ausgeschlossen werden, dass ein Gas/Rohgas/Reingas/Aerosol oder Druckluft bei der Reinigung zwischen den Innenraumbereichen ausgetauscht wird.

Auch kann der Befestigungsbereich in einer bevorzugten Ausführung zum kraft-, form- und/oder stoffschlüssigen Zusammenwirken mit dem Material der Filterpatrone ausgelegt sein, etwa unter Nutzung einer Vernietung, Verklebung und/oder Verschweißung. Dadurch wird sichergestellt, dass die Halteschiene sich nicht unbeabsichtigt von der Filterpatrone lösen kann, sondern in einer festen, unlösbaren Verbindung mit der Filterpatrone verbleibt.

Ein günstiges Ausführungsbeispiel zeichnet sich dadurch aus, dass die Halteschiene als einstückiges Bauteil, etwa aus Metall oder Kunststoff, ausgebildet ist. Durch die integrale Bauweise werden zusätzliche Montageschritte und Befestigungsvorrichtungen vermieden, was sich günstig auf die Herstellungskosten der Filterpatronen auswirkt.

Die Halteschiene kann beispielsweise nach Art einer spanlos gefertigten Blechplatte ausgebildet sein, was die Produktion einer hohen Stückzahl in kurzer Prozesszeit ermöglicht und sich zudem günstig auf eine Verringerung der Umweltbelastung auswirkt.

Auch kann die Halteschiene beispielsweise bevorzugt nach Art eines Kunststoffspritzgussbauteils ausgestaltet sein. Kunststoffspritzgussbauteile eignen sich besonders, da eine freie Gestaltung der Geometrie ermöglicht wird und sich dies besonders bei einer speziellen Formanforderung wie bei der Halteschiene anbietet.

Der Querschnitt der Halteschiene ist in einer bevorzugten Form mit symmetrisch gleichverteilten Schenkeln ausgebildet. Eine symmetrische Ausgestaltung gewährleistet, dass die Halteschiene nicht in einer besonderen Ausrichtung an der Filterpatrone befestigt werden muss, was sich fehelerreduzierend auswirkt.

Mit anderen Worten wird die Aufgabe auch dadurch gelöst, dass eine Trennwand zum Unterteilen eines Innenraums einer beispielsweise als Hülse ausgebildeten Filterpatrone zum Abscheiden von Partikeln, mit einer Kontaktstelle zum angebracht werden an dem Haltebereich der Halteschiene, Teil der Filteranlage ist bzw. betrifft die Erfindung einen Einsatz zum Unterteilen eines Innenraums einer Filterpatrone zum Abscheiden von Partikeln, mit einer Kontaktstelle, die vorbereitet ist, um den Haltebereich der Halteschiene nach einem der vorherigen Ansprüche aufzunehmen. Dies hat zum Vorteil, dass bei der Reinigung der Filterpatronen, die üblicherweise durch Aufbringen eines Druckluftstoßes entgegen der Strömungsrichtung durchgeführt wird, nur ein Teil der Fläche der Filterpatrone gleichzeitig abgereinigt werden kann, indem der Innenraum in zwei oder mehr Bereiche eingeteilt wird und die Innenraumbereiche durch jeweils ein eigenes Druckluftventil mit Druckluft beaufschlagt werden.

Vorzugsweise kann die Kontaktstelle des Einsatzes/der Trennwand lösbar oder unlösbar an dem Haltebereich angebracht sein. Bei einer lösbaren Anbringung wird sichergestellt, dass die Filterpatrone durch eine neue Filterpatrone ersetzt werden kann, indem die Filterpatrone über die Haltschienen von der Trennwand herunter geschoben wird. Bei einer unlösbaren Ausführung wird gewährleistet, dass der Innenraum der Filterpatrone permanent durch die Trennwand in mehrere Innenraumbereiche unterteilt wird.

Die Trennwand ist in einem günstigen Ausführungsbeispiel als ein mittleres Schwert ausgebildet. Durch die Ausbildung mit einem plattenartigen Bereich, auf den die Filterpatrone aufgeschoben wird, und einem breiteren, abschließenden Bereich kann konstruktiv festgelegt werden, wie weit die Filterpatrone maximal auf die Trennwand aufgeschoben werden kann.

Der Einsatz kann auch einen kreuzförmigen Querschnitt aufweisen. Dadurch wird der Innenraum der Filterpatrone vorteilhafterweise in vier Segmente unterteilt, was also einen geringen, notwendigen Druckluftstoß zur Reinigung bedingt. Durch konstruktive Ausgestaltung des Einsatzes kann der Innenraum auch in 3, 6 oder mehr Bereiche unterteilt werden.

Vorzugsweise ist die Trennwand so ausgebildet, dass die Enden über die Filterpatrone überstehen. Dadurch wird verhindert, dass die Filterpatrone zu weit auf die Trennwand aufgeschoben werden kann, was sich negativ auf die Filterleistung auswirken kann.

Es kann also gesagt werden, dass die Aufgabe dadurch gelöst wird, dass eine Filterpatrone zum Abscheiden von Partikeln eine auf der Innenseite angebrachte oder anbringbare Halteschiene besitzt, in die eine Trennwand eingesetzt ist.

Die Filterpatrone besitzt den Innenraum umgebendes Filtermaterial, das vorzugsweise zickzackförmig und/oder fächerförmig ausgebildet ist, was vorteilhafterweise eine relativ große Filterfläche bei gleichzeitig geringem Flächenbedarf sicherstellt.

Es ist vorteilhaft, wenn die Filterpatrone für eine Filteranlage, die im "Up-Flow"-, "Cross-Flow"- oder "Down-Flow"-Prinzip durchströmt wird, eingesetzt werden. Je nach Größe der im Rohgas/Aerosol enthaltenden Partikel werden unterschiedliche Durchströmungs-Prinzipien angewandt. Die erfindungsgemäße Filterpatrone ist vorteilhafterweise für jede Art der Durchströmung funktionserhaltend einsetzbar.

Das Leervolumen innerhalb der Filterpatrone kann durch einen Verdrängungskörper der auf der sauberen Seite der durch das Filtermaterial gebildeten Wandung der Filterpatrone angeordnet ist, reduziert werden, um den Reinigungseffekt zu verbessern. Mit anderen Worten betrifft die Erfindung eine in mehrere Segmente unterteilte Filterpatrone, die durch an der Filterpatrone befestigte Halteschienen geführt auf eine die Filterpatrone unterteilende Trennwand aufschiebbar ausgestaltet ist. Durch die Möglichkeit, die Filterpatrone auf die Trennwand aufzuschieben, wird gewährleistet, dass die Filterpatronen regelmäßig ausgetauscht werden können.

Die Erfindung wird nachfolgend mit Hilfe einer Zeichnung erläutert. Es zeigen:
- Fig. 1: eine perspektivische Darstellung einer Filterpatrone mit einer Halteschiene, die auf einen Einsatz aufschiebbar ist,
- Fig. 2: eine zur Fig. 1 gedrehte perspektivische Darstellung der Filterpatrone mit der an ihrer Innenwand eingesetzten Halteschiene, und
- Fig. 3: eine vergrößerte perspektivische Ansicht der Halteschiene, die die Filterpatrone beim Aufschieben auf den Einsatz führt.

Die Figuren sind lediglich schematischer Natur und dienen ausschließlich dem Verständnis der Erfindung. Die gleichen Elemente sind mit denselben Bezugszeichen versehen.

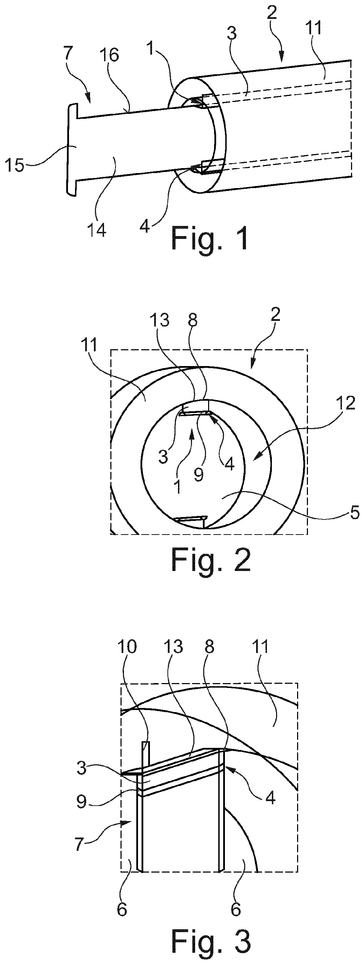

Fig. 1 zeigt eine erfindungsgemäße Halteschiene 1, die an einer Filterpatrone 2 angebracht ist. Die Halteschiene 1 besteht aus einem Hauptkörper 2, an dem ein Haltebereich 4 ausgebildet ist. Durch den Haltebereich 4 wird ein den Innenraum 5 in mehrere voneinander getrennte Innenraumbereiche 6 unterteilender Einsatz 7 gehalten/geführt. Der Hauptkörper 3 weist auch einen Befestigungsbereich 8 auf, über den die Halteschiene 1 an die Filterpatrone 2 gekoppelt wird.

Dabei ist die Halteschiene 1, wie auch besonders gut in Fig. 2 oder Fig. 3 zu sehen, im Querschnitt in einer Y-artigen Konfiguration ausgebildet. Das bedeutet, dass der Hauptkörper 3 als Steg ausführt ist, von dem zwei Schenkel 9 eine konkave Fläche oder eine Nut ausbilden. Der Hauptkörper 3 der Halteschiene 1 ragt in den Innenraum 5 der Filterpatrone 2 etwa 10% des Durchmessers des Innenraums 5 weit hinein. Daran schließen sich die Schenkel 9 des Haltebereichs 4 an, die etwa 10 Millimeter lang sind. Die Schenkel 9 bilden für sich eine eckig oder rund ausgestaltete C- oder U-Form, wobei die Form auf den Querschnitt des Einsatzes 7 abgestimmt ist. Dabei ist der mittlere Abschnitt zwischen den Schenkeln 9 etwa 20 Millimeter lang.

Die Halteschiene 1 ist etwa so lang wie die Filterpatrone 2, wobei die Halteschiene 1 einen über die Länge gleichbleibenden Querschnitt besitzt. Dem Haltebereich 4 gegenüber angeordnet, auf der anderen Seite des Hauptkörpers 3, ist ein Befestigungsbereich 8 ausgebildet. Der Befestigungsbereich 8 steht zu beiden Seite des Hauptkörpers 3 orthogonal ab. Zwei stiftartige Vorsprünge 10 sind mit dem Befestigungsbereich 8 verbunden, die sich radial nach außen erstrecken und vorgesehen sind, um in ein Filtermaterial 11 der Filterpatrone 2 hinein gesetzt zu werden.

Zwischen dem Befestigungsbereich 8 und einen Innenseite 12 der Filterpatrone 2 ist ein Dichtungsbereich 13 ausgebildet, der das Durchströmen eines Rohgases/Aerosols zwischen der Halteschiene 1 und der Filterpatrone 2 verhindert. Der Dichtungsbereich 13 ist konzentrisch zu der Innenseite 12 der Filterpatrone 2 ausgebildet.

Die Filterpatrone 2 ist zylinderförmig, wobei das Filtermaterial 11 einen zylinderförmigen Innenraum 5 umgibt. Der Innenraum 5 der Filterpatrone 2 wird durch den Einsatz 7, der von den Schenkeln 9 des Haltebereichs 4 geführt wird, in die zwei Innenraumbereiche 6 unterteilt. Die Innenraumbereiche 6 werden also von der Innenseite 12 der Filterpatrone und dem Hauptkörper 3 der Halteschiene 1 und dem Einsatz 7 begrenzt. An den in Längsrichtung liegenden Außenflächen ist die Filterpatrone 2 nicht von Material begrenzt. Die Halteschiene 1 wird über den Vorsprung 10 in der Filterpatrone befestigt. In jeder Filterpatrone 2 werden zwei Halteschienen 1, die sich gegenüber liegen, an der Innenseite 12 der Filterpatrone 2 befestigt.

Der Einsatz 7 ist als längliches Schwert ausgebildet, das plattenartig ausgebildet ist. Der Einsatz 7 besitzt einen Einschubbereich 14, der eine rechteckige Fläche aufweist, und einen Abschlussbereich 15, der breiter als die schmalere Seite der rechteckigen Fläche, ist. Der Einschubbereich 14 ist vorgesehen, um in die Filterpatrone 2, insbesondere in den Haltebereich 4 der Halteschiene 1, eingeschoben zu werden. Eine Kontaktstelle 16, der an den längeren Kanten der rechteckigen Fläche des Einschubbereichs 14 liegt, ist so ausgestaltet, dass der Einsatz 7 in die Nut, die durch die Schenkel 9 der Halteschiene 1 gebildet wird, eingeschoben werden kann.

Der Einsatz 7 wird also an zwei Seiten von Halteschienen 1 in der Filterpatrone 2 geführt. Dabei ist der Kontakt zwischen dem Haltebereich 4 und der Kontaktstelle 16 so ausgestaltet, dass kein Rohgas/Reingas von dem einen Innenraumbereich 6 in den anderen Innenraumbereich 6 strömen kann. Der Abschlussbereich 15 ist breiter als der Einschubbereich 14 und dient somit als Begrenzung der axialen Verschiebbarkeit des Einsatzes 7. Der Einschubbereich 14 ist etwa zwischen 350 und 450 mm breit, bevorzugt 400 mm, während der Abschlussbereich 15 eine Breite besitzt, die etwa so groß ist wie der Innendurchmesser der Filterpatrone 2.

Die Kontaktstelle 16 ist insbesondere lösbar an der Halteschiene 1 befestigt. Der Einsatz 7 wird allein durch die geometrische Ausgestaltung und die Abstimmung des Haltebereichs mit der Kontaktstelle 16 an dem Einsatz 7 geführt und gehalten. Es kann auch ein Einsatz 7 eingesetzt werden, der den Innenraum 5 der Filterpatrone 2 in mehr als zwei, beispielsweise in vier Segmente unterteilt. Dann sind dementsprechend auch vier Halteschienen 1 in der Filterpatrone 2 angebracht.

### Bezugszeichenliste

- 1: Halteschiene
- 2: Filterpatrone
- 3: Hauptkörper
- 4: Haltebereich
- 5: Innenraum
- 6: Innenraumbereich
- 7: Einsatz
- 8: Befestigungsbereich
- 9: Schenkel
- 10: Vorsprung
- 11: Filtermaterial
- 12: Innenseite
- 13: Dichtungsbereich
- 14: Einschubbereich
- 15: Abschlussbereich
- 16: Kontaktstelle

## Patentansprüche

1. Filterpatrone (2) zum Abscheiden von Partikeln, mit einem den Innenraum (5) umgebendes Filtermaterial (11) und mit einem Einsatz (7), der den Innenraum (5) der Filterpatrone (2) in mehrere voneinander getrennte Innenraumbereiche (6) unterteilt, **dadurch gekennzeichnet, dass** die Filterpatrone (2) zwei auf einer Innenseite (12) der Filterpatrone (2) gegenüberliegend angebrachte Halteschienen (1) besitzt, wobei die Halteschienen (1) zum Einsatz in einer Partikel abscheidenden Filteranlage vorgesehen sind und einen Hauptkörper (3) aufweisen, an dem ein Haltebereich (4) zum Anbringen des Einsatzes (7) vorhanden ist und an dem auch ein Befestigungsbereich (8) zum Koppeln an der Filterpatrone (2) vorhanden ist, wobei der Einsatz (7) eine Kontaktstelle (16) besitzt, die vorbereitet ist, um den Haltebereich (4) der Halteschienen (1) aufzunehmen, und wobei der Einsatz (7) lösbar an dem Haltebereich (4) angebracht ist, wobei der Kontakt zwischen dem Haltebereich (4) und der Kontaktstelle (16) so ausgestaltet ist, dass kein Rohgas/Reingas von einem Innenraumbereich (6) in einen anderen Innenraumbereich (6) strömen kann.

2. Filterpatrone (2) nach Anspruch 1, **dadurch gekennzeichnet, dass** die Halteschiene (1) im Querschnitt eine y-artige Konfiguration besitzt.

3. Filterpatrone (2) nach Anspruch 1 oder 2, **dadurch gekennzeichnet, dass** der Hauptkörper (3) als längliches Schild ausgebildet ist.

4. Filterpatrone (2) nach einem der Ansprüche 1 bis 3, **dadurch gekennzeichnet, dass** der Haltebereich (4) zum Einschieben des Einsatzes (7) geometrisch vorbereitet ist.

5. Filterpatrone (2) nach einem der Ansprüche 1 bis 4, **dadurch gekennzeichnet, dass** der Haltebereich (4) nutförmig und/oder konkav ausgebildet ist.

6. Filterpatrone (2) nach einem der Ansprüche 1 bis 5, **dadurch gekennzeichnet, dass** der Haltebereich (4) c- oder u-förmig ausgestaltet ist.

7. Filterpatrone (2) nach einem der Ansprüche 1 bis 6, **dadurch gekennzeichnet, dass** der Befestigungsbereich (8) auf der dem Haltebereich (4) gegenüberliegenden Seite des Hauptkörpers (3) angeordnet ist.

## Claims

1. Filter cartridge (2) for separating particles, having a filter material (11) surrounding the interior space (5) and having an insert (7) which divides the interior space (5) of the filter cartridge (2) into a plurality of interior space regions (6) separated from each other, **characterized in that** the filter cartridge (2) has two retaining rails (1) which are provided opposite each other on an inner side (12) of the filter cartridge (2), wherein the retaining rails (1) are provided for use in a particle-separating filter system and comprise a main body (3) on which there is a retaining area (4) for attaching the insert (7) and on which there is also an attachment area (8) for coupling to the filter cartridge (2), wherein the insert (7) has a contact point (16) prepared to house the retaining area (4) of the retaining rails (1) and wherein the insert (7) is detachably attached to the retaining portion (4), wherein the contact between the retaining area (4) and the contact point (16) is such that no raw gas/clean gas can flow from one interior space region (6) to another interior space region (6).

2. Filter cartridge (2) according to claim 1, **characterized in that** the retaining rail (1) has a y-shaped configuration in cross section.

3. Filter cartridge (2) according to claim 1 or 2, **characterized in that** the main body (3) is formed as an elongated shield.

4. Filter cartridge (2) according to one of claims 1 to 3, **characterized in that** the retaining area (4) is geometrically prepared for insertion of the insert (7).

5. Filter cartridge (2) according to one of claims 1 to 4, **characterized in that** the retaining area (4) is groove-shaped and/or concave in shape.

6. Filter cartridge (2) according to one of claims 1 to 5, **characterized in that** the retaining area (4) is c-shaped or u-shaped.

7. Filter cartridge (2) according to one of claims 1 to 6, **characterized in that** the attachment area (8) is arranged on the side of the main body (3) opposite the retaining area (4).

## Revendications

1. Cartouche de filtrage (2) permettant la séparation de particules, avec un matériau de filtrage (11) entourant l'espace intérieur (5) et avec un insert (7) qui divise l'espace intérieur (5) de la cartouche de filtrage (2) en plusieurs régions d'espace intérieur (6) séparées les unes des autres, **caractérisée en ce que** la cartouche de filtrage (2) comprend deux rails de maintien (1) montés l'un en face de l'autre sur un côté intérieur (12) de la cartouche de filtrage (2), dans laquelle les rails de maintien (1) sont destinés à une utilisation dans une installation de filtrage à séparation de particules et présentent un corps principal (3) au niveau duquel se trouve une région de maintien (4) permettant un montage de l'insert (7) et au niveau duquel se trouve également une région de fixation (8) permettant un couplage à la cartouche de filtrage (2), dans laquelle l'insert (7) présente un point de contact (16) préparé pour accueillir la région de maintien (4) des rails de maintien (1), et dans laquelle l'insert (7) est monté détachable au niveau de la région de maintien (4), dans laquelle le contact entre la région de maintien (4) et le point de contact (16) est conçu de sorte qu'aucun gaz brut/gaz épuré ne puisse s'écouler d'une région d'espace intérieur (6) vers une autre région d'espace intérieur (6).

2. Cartouche de filtrage (2) selon la revendication 1, **caractérisée en ce que** le rail de maintien (1) présente une configuration en forme de Y en section transversale.

3. Cartouche de filtrage (2) selon la revendication 1 ou 2, **caractérisée en ce que** le corps principal (3) est réalisé sous la forme d'une protection allongée.

4. Cartouche de filtrage (2) selon l'une quelconque des revendications 1 à 3, **caractérisée en ce que** la région de maintien (4) est préparée géométriquement pour l'insertion de l'insert (7).

5. Cartouche de filtrage (2) selon l'une quelconque des revendications 1 à 4, **caractérisée en ce que** la région de maintien (4) est réalisée en forme de rainure et/ou concave.

6. Cartouche de filtrage (2) selon l'une quelconque des revendications 1 à 5, **caractérisée en ce que** la région de maintien (4) est en forme de C ou de U.

7. Cartouche de filtrage (2) selon l'une quelconque des revendications 1 à 6, **caractérisée en ce que** la région de fixation (8) est agencée du côté du corps principal (3) qui fait face à la région de maintien (4).
